# NEW EUROPEAN PATENT SPECIFICATION

(11) **EP 0 152 531 B2**
(45) Date of publication and mention of the opposition decision: **28.09.1994**
(45) Mention of the grant of the patent: 18.07.1990
(21) Application number: 84112446.4
(22) Date of filing: 16.10.1984
(51) Int. Cl.: F16B 19/10

(54) **Blind fastener**
Blindniet
Rivet aveugle

(30) Priority: 23.02.1984 US 583029
(43) Date of publication of application: 28.08.1985
(73) Proprietor: Monogram Industries, Inc., Providence Rhode Island 02903-2360 (US)
(72) Inventor: Pratt, John D., Rancho Cucamonga California 91701 (US)
(74) Representative: Witte, Alexander, Dr.-Ing.

(56) References cited:
- CH-A- 429 389
- FR-A- 724 508
- FR-A- 1 300 936
- FR-A- 2 438 761
- GB-A- 553 124
- GB-A- 598 730
- GB-A- 761 149
- GB-A- 1 092 331
- GB-A- 1 604 503
- JP-A- 4 621 128
- SU-A- 259 565
- US-A- 1 551 381
- US-A- 2 099 678
- US-A- 2 282 711
- US-A- 2 765 699
- US-A- 2 776 681
- US-A- 2 884 099
- US-A- 2 915 934
- US-A- 2 974 558
- US-A- 3 129 630
- US-A- 3 236 143
- US-A- 3 253 495
- US-A- 3 276 308
- US-A- 3 302 510
- US-A- 3 357 094
- US-A- 3 643 544
- US-A- 3 653 294
- US-A- 3 657 956
- US-A- 4 012 984
- US-A- 4 089 247
- US-A- 4 230 017
- US-A- 4 370 081
- US-A- 4 376 604
- US-A- 4 747 202
- Brochure PLT 1040
- Avdel data sheet IBT
- Brochure Visu-Lok II

## Description

The invention starts from a blind fastener for mounting in aligned openings through workpieces to connect them together in overlapping outer and inner relation and adapted to be set by wrench means for applying torque, the fastener comprising:
a generally tubular fastener body extending axially within said openings in said workpieces, said fastener body having
a bore extending axially through said fastener body and
an enlarged body head for engaging said outer workpiece;
an externally threaded cylindrical stem passing through said fastener body, said stem having
an enlarged stem head spaced inwardly from the inner end of said fastener body and
a holding region spaced outwardly from said body head, said holding region being provided with a wrench engaging region;
a deformable sleeve around said stem in contact with said stem head, movement of said stem outwardly through said fastener body deforming said sleeve to a fully set condition in overlying contact with the inner surface of said inner workpiece;
a break groove in said stem; at an axial location positioned substantially flush with an outer surface of said body head when said sleeve is fully set, an outer portion of said stem being separated from remaining inner portions of said stem at said break groove by continued application of turning force to said fastener after said sleeve is fully set, said outer portion of said stem extending outwardly of said break groove.

The invention, further, starts from a method of fastening overlapped outer and inner workpieces using a fastener of the type having a generally tubular fastener body having an enlarged body head, a deformable sleeve at an end of said fastener body opposite from said body head, and an externally threaded cylindrical stem extending through aligned bores in said sleeve and said fastener body, said stem being provided with a break groove between inner and outer regions of said stem, the method comprising the steps of:
inserting said fastener through aligned openings in said workpieces to be fastened together until said body head engages an outer surface of said outer workpiece with said sleeve positioned beyond an inner surface of said inner workpiece;
applying torque to an outer portion of said stem to turn said stem in said one direction until said sleeve has been bulged laterally to a fully set condition overlying said inner surface of said inner workpiece, and said break groove has moved outwardly to a position in substantially flush relation with an outer surface of said body head; as said sleeve has become fully set;
continuing to apply torque to said stem to shear off said outer portion of said stem at said break groove.

A blind fastener and a method of the above-mentioned kind are described in US-A-4,089,247.

This prior art blind fastener has a tubular fastener body with internal threads which mate external threads of the stem. The fastener body has a conical body head which is inserted into a respective conical recess on the outer surface of the outer workpiece such that the fastener body head surface is flush with the outer surface of the outer workpiece. The body head surface is provided with a recess for accepting a portion of a power tool bit to keep the tubular body from rotating during the setting of the fastener. The stem has an inner portion provided with the afore-mentioned threads whereas an outer portion is designed to protrude from the body head surface. The outer portion is provided with flattened lateral surfaces to allow a form-locking wrench to apply torque on the stem.

For setting this kind of fastener, a special wrench tool has to be used which has a nose piece with an outer circumferential front portion with protrusions mating the recess in the fastener body head surface whereas an inner wrench portion engages the flattened lateral surfaces of the outer stern portion. The rotating inner wrench portion of the tool is then rotated so that torque is exerted on the stem while the tubular fastener body is held stationary by means of the circumferential wrench tool front portion being in stationary form-locking relationship with the recess of the fastener body head.

When continuous torque is applied on the stem in the aforementioned manner, the stem will move outwardly in an axial direction whereby the deformable sleeve is deformed at the inner surface of the inner workpiece to form a bulge and, thus, secure the inner workpiece relative to the outer workpiece. When the fastener is fully set, a breakneck groove in the stem has come into an axial position where it is flush with the outer surface of the outer workpiece. If continuing torque is now applied on the outer portion of the stem, now entirely protruding from the outer workpiece, then the stem will be sheared off at the weakened location of the breakneck groove.

When the setting of the blind fastener is thus completed, the cylindrical outer portion of the stem that had been sheared off will then be expelled or otherwise removed from the wrench tool to allow a subsequent blind fastener setting operation to be performed with the same tool. If a larger number of blind fasteners is set in this manner, as is the case in the aircraft industry where blind fasteners are used to assemble aircraft bodies, a large number of sheared-off stem portions the so-called "pin tails" will be distributed all over the place in the assembly plant.

As mentioned before, blind fasteners of the above-mentioned kind have a principal field of application in the aerospace industry. It goes without saying that such blind fasteners have to be manufactured from a non-corrosive material e.g. of stainless steel. When a blind fastener is set, one portion of the stem will remain in the set fastener, i.e. in the assembled aircraft whereas the sheared-off portion will be thrown away in the assembly plant. As the portion of the blind fastener which remains in the assembled aircraft is made of e.g. stainless steel, the thrown-away pin tail does also consist of stainless steel. It is, therefore, extremely difficult to recover the thrown-away pin tails lying around all over the place not only because of their extremely small dimensions but also because of the fact that one cannot use other than mechanical sweep methods for recovering them.

Another drawback of these prior art blind fasteners lies in the fact that a specialized wrench tool has to be used which is equipped with a front portion having protrusions which exactly mate the recess in the fastener body head, as mentioned above. A first disadvantage that is created by this situation is that a large number of wrench tools has to be used to mate blind fasteners of different dimensions because when the dimensions of the fastener body head vary, another wrench tool will have to be used to ensure proper form-locking.

A second disadvantage lies in the fact that in order to ensure a proper form-locking between the wrench tool and the fastener body head, the recess will have to be designed with sufficiently deep dimensions such that the protrusions on the front circumferential portion of the wrench tool may be properly inserted into the recess. However, when the recess has to be designed sufficiently deep, this requires that the fastener body head, too, is made sufficiently deep, thus resulting in limitations with respect to the thickness of the workpieces to be fastened together.

A third disadvantage with the prior art fasteners is that during the installation procedure, the wrench tool tends to "cam out" of the fastener body head, particularly when the wrench tool is not properly aligned with the axis of the blind fastener or when the protrusions on the front circumferential portion of the wrench tool are worn out, thereby seriously weakening the strength of the fastener and sometimes preventing the completion of the installation. As a consequence, the setting operation of the prior art blind fasteners, in order to ensure reliable fastening, as is mandatory in the aircraft industry, requires precision work and, hence, ample setting time.

Another blind fastener of the kind mentioned before is known from US-A-2,765,699. This fastener is provided with a plurality of Phillips-type wrenching recesses in the fastener body head to receive the jaws of a suitable screw driver.

Still another kind of prior art blind fastener and method for setting same is described in a data sheet VOI SHAN, Standard PLT 1040, of April 10, 1974.

The PLT 1040 blind fastener is designed for connecting together in overlapped relation an outer honeycomb structure with an inner rigid plate. The fastener has a stem with a threaded portion protruding from the fastener body. A drive nut is screwed on the front portion of the stem. The fastener is inserted into aligned openings of the honeycomb structure in the rigid plate until the rear ends of the fastener body and of the stem with its enlarged head and deformable sleeve therebetween extend beyond the inner surface of the rigid plate. An appropriate wrench tool is used to grip both the drive nut and lateral flattened sections of the stem front portion. When the blind fastener is inserted into the aligned openings of the workpieces, the drive nut and the stem are rotated relative to each other so that the deformable sleeve is deformed as described above with respect to the blind fastener of US-A-4,089,247.

However, in contrast thereto, the PLT 1040 installation instructions teach the user to continue the afore-mentioned relative rotation operation of the stem against the drive nut until either the front end of the stem protrudes from the outer surface of the honeycomb material by a predetermined amount x or until the nut head is flush with the outer surface of the honeycomb structure. The latter condition is a criterion for the fastener to be fully set, because the fastener body also in this case is provided with an outer enlarged head tapering inwardly such that the body head will be impressed into the relatively weak honeycomb structure material upon setting of the fastener. The condition of setting the fastener until the stem protrudes from the outer surface by a predetermined amount x is, therefore, equivalent to the second condition for the outer flat surface of the enlarged fastener body head to be flush with the outer surface of the honeycomb structure. The setting procedure of this kind of fastener is, therefore, a smooth and steady procedure performed under visual control of either the stem protrusion or the dimpled state of the body head to ensure that the honeycomb structure is crushed only to the necessary extent.

One of the two setting conditions having been detected, the PLT 1040 installation instructions call for removal of the drive nut by rotating it in a clockwise direction. In practice, this has to be accomplished by either unscrewing the nut by hand, which is extremely time-consuming, or by using a different wrench tool, because the wrench tool originally used for setting the fastener is normally provided with a stationary outer wrench flat for holding the drive nut unrotated and prevent it from rotating while an inner wrench region is connected to a spindle of a drive-motor to rotate the stem against the rotationally fixed drive nut. Thus, the wrench tool used for setting the fastener cannot be used at a later stage for unscrewing the nut from the stem, or an extremely complicated wrench tool with various modes of operation for alternately rotating either the outer or the inner wrench flats is to be designed and used.

When the drive nut has thus been removed from the protruding portion of the stem, PLT 1040 installations instructions teach the user to mill that protruding stem portion flush.

It goes without saying that this milling procedure is extremely time-consuming, too, and, further, milling of relatively large quantities of metal will result in a substantial pollution with metal particles of the working area. Both these disadvantages, namely extreme time consumption when setting the fasteners and milling off the protruding stem portions as well as the generation of a large quantity of metallic particles spread around is unacceptable for modern high-precision assembly lines as are used e.g. in the production airplanes, missiles, etc.

US-A-2,915,934 teaches a blind fastener for similar applications which is, too, provided with a tubular fastener body, an externally threaded stem with enlarged head and a deformable sleeve as described above. This prior art fastener, too, is provided with a drive nut at the outside of the outer workpiece and relative rotation of the drive nut and of the stem results in the fastener to become fully set. However, in contrast to the PLT 1040 blind fastener but similarly to the US-A-4,089,247 or US-A-2,765,699 blind fastener, discussed above, US-A-2,915,934 teaches to provide the stem with a localized weakened region which, when the fastener is fully set, is flush with the outer surface of the drive nut. Thus, when continuous torque is applied to the fastener after being fully set, the portion of the stem which extends beyond the outer surface of the drive nut is sheared off. However, this means that the drive nut remains with the fastener when it is fully set. In the production of airplanes and missiles, this is entirely unacceptable for reasons of aerodynamics, because drive nuts, extending over the outer surface of the airplane or missile body, constitute an air resistance.

Although in another embodiment of the US-A-2,915,934 blind fastener it is suggested to use a drive nut of conical shape which is arranged in a corresponding conical depression in the outer surface, thus resulting in a flush outer surface of the outer workpiece, it is apparent that handling of this embodiment of the fastener is still much more difficult, because the plane outer surface of the drive nut does not offer appropriate gripping elements for safely securing the drive nut against rotation. It has to be borne in mind that a substantial gripping force has to be exerted on the drive nut, the torque being equal to the torque necessary for shearing off the protruding portion of the stem. Therefore, although not described in US-A-2,915,934, recesses will have to be provided in the outer surface of the drive nut to allow firm gripping thereof, as discussed above with respect to US-A-4,089,247 or US-A-2,765,699 going back to the same inventor as US-A-2,915,934.

Still another type of blind fasteners is described in US-A-2,282,711 and SU-A-259,565.

In this species of blind fasteners, the design is similar to the one discussed above with respect to US-A-2,915,934 for what concerns the specific design of the stem, the deformable sleeve, and the tubular fastener body. However, the design of the drive nut is substantially different, because a two- part drive nut is used, an inner portion of which is conically shaped and enters into a respective outer conical expansion of the opening in the outer workpiece, whereas an outer portion of the drive nut remains axially remote from the outer surface of the outer workpiece, the outer portion being provided with wrench flats. The inner and the outer portions of the drive nut are connected by a neck of relative small wall thickness. As discussed above with respect to US-A-2,765,699 and US-A-2,915,934, the stem is provided with an annular groove weakening its diameter at an axial position being flush with the outer surface of the outer workpiece when the blind fastener is fully set.

Again, for setting this kind of blind fastener, a wrench tool is used which simultaneously engages with corresponding flats at the outside of the outer portion of the drive nut and of the protruding stem portion, respectively. However, in contrast to the blind fastener of US-A-2,915,934 and in contrast to the PLT 1040 blind fastener, for the blind fasteners of US-A-2,282,711 and SU-A-259,565, it is mandatory to rotate the outer portion of the drive nut and to prevent the stem from being rotated. Only in this case, the frangible neck between the outer and the inner portions of the drive nut will break first and, upon continuing turning and applying torque to the outer portion of the drive nut, the breaking groove of the stem will break so that the outer portion of the drive nut together with the broken-off outer portion of the stem can be removed simultaneously. If the opposite were done, i.e. the outer portion of the drive nut were prevented from rotating and the external portion of the stem were rotated, the breaking groove of the stem would break first, with said portion being unscrewed from the drive nut and the drive nut with its outer portion would remain in place.

However, the fasteners according to US-A-2,282,711 and SU-A-259,565 have the following two disadvantages:

As can be taken from the above discussion of the mechanisms effective during setting of these fasteners, it becomes apparent that it is only the outer portion of the drive nut which is sheared-off whereas the breaking groove of the stem is broken under the action of tensile pull, because no shearing effect may develop if the stem is prevented from rotating. As a result, improper surfaces at the location of breaking off are generated, because as is known to persons of ordinary skill, a cylindrical body which is broken under the action of axial pull will never be separated in a proper radial plane but rather along a paraboloid surface, whereas in the case of shearing-off at a predetermined weakened region, an almost perfect radial breaking plane may be achieved.

Therefore, US-A-2,282,711 teaches to additionally use finishing tools for smoothing up the face of the work in order to finish the job properly. Therefore, this concept of blind fasteners, too, involves a significant amount of working time for finishing the surfaces after setting the fastener. It goes without saying that this problem turns out to be even more severe if due to improper preparation of pre-setting of the fasteners the breaking groove should not be flush with the outer surface of the outer workpiece when the fastener is set, because, then, the breaking-off due to tensile pull will either occur outside or inside the outer surface of the outer workpiece, thus either leaving a small portion of the stem protruding from the outer surface of the outer workpiece or a respective depression therein, both presenting problems in the production of aircrafts and missiles.

The second main disadvantage of this concept of fasteners is that because of one portion of the drive nut remaining with the blind fastener, the design engineer is not free in his selection of materials, as explained above with respect to the US-A-2,765,699 blind fastener. Therefore, as the portion of the drive nut remaining with the set blind fastener in the assembled aircraft is made of a non-corrosive and, hence, non-magnetic material, the pin tails, generated when setting this kind of blind fasteners are also entirely non-magnetic and do, hence, not allow to use magnetic sweep methods for recovering purposes.

Finally, US-A-3,276,308 teaches a blind fastener similar to the one of US-A-4,089,247 discussed above. More particularly, US-A-3,276,308 shows a "nut" which is wound on the outer portion of the stem protruding from the fastener body. However, the "nut" is not a part of the fastener but a part of the setting tool and, hence, the "nut" has no external wrench engaging surfaces.

It is, therefore, an object of the present invention to improve a blind fastener as well as a method of fastening overlapped outer and inner workpieces, as mentioned at the outset, such that only a minimum of setting time and a minimum number of wrench tool for various dimensions of fasteners are required, that, further, highly reliable connections are established by setting the fasteners and that effective and economic methods for recovering the sheared-off pin tails may be used, preferably by means of a non-mechanical sweep.

According to the invention, this object is achieved by the fastener mentioned at the outset by
a drive nut threadedly mounted on said stem adjacent said body head, said nut having external wrench engaging surfaces and being separate from said fastener body and being able to frictionally contact said body head to restrain said fastener body from rotating in said openings in said workpieces when said stem is rotated, said drive nut and said wrench engaging region being adapted for concurrent engagement by said wrench means for holding said drive nut against rotation and for turning said stem relative to said drive nut in one direction, wherein turning motion of said stem relative to said drive nut in said one direction moves said stem in an axially outward direction through said fastener body;
said outer portion of said stem extending through said nut and being separable from said inner portions with said nut entirely attached.

The aforementioned object is, further, achieved by the method, mentioned at the outset, by the steps of:
screwing a drive nut on said outer portion of said stem prior to inserting said fastener through aligned openings in said workpieces;
gripping said drive nut to hold it against rotation while applying torque to said outer portion to shear off said outer portion with said drive nut still attached to said outer portion of said stem.

The fastener and the method according to the present invention, thus, offer a number of substantial advantages.

As compared with prior art blind fasteners having Phillips-type recesses in the fastener body head, as described in US-A-4,089,247 or US-A-2,765,699, the invention offers the substantial advantage to have a drive nut with relatively big wrench flats allowing safe gripping of the fastener without any risk of damaging those parts of the fastener that remain with the fastener in its fully set condition or even damaging the surrounding surface of the workpiece. Further, a substantial reduction in setting time may be achieved with the invention, because applying the wrench tool to the blind fastener is a far less critical operation as a hexagonal drive nut is far easier and safer to grip with a wrench tool than is the case with Phillips-type recesses. Further, avoiding recesses in the fastener body head allows to make the head fatter and, hence, allows to assemble thinner workpieces as is the case in the aforementioned prior art fasteners. Finally, by shearing off the outer stem portion with the drive nut still attached results in having relatively big pin tails which are far easier to be retrieved using mechanical methods as is the case in prior art blind fasteners with very small cylindrical stem portions lying around all over the place. Further, having an entirely separate element, namely the drive nut, separating from the set blind fastener allows to make the drive nut from a ferromagnetic material, because nothing of the drive nut remains with the set fastener. In this case, magnetic sweep techniques may be used to recover the pin tails.

When comparing the blind fastener and the method according to the invention with the PLT 1040 fastener, it becomes clear that a drastic reduction of working time is achieved, because unlike the PLT 1040 fastener it is neither necessary to separately unscrew the drive nut, because according to the invention the drive nut, together with the outer portion of the stem, is entirely sheared off as one piece, nor is any milling operation necessary so that there is no need whatsoever for removing metal particles or chips.

Finally, as compared with the concept of the fasteners as described in US-A-2,282,711 and SU-A-259,565, the invention offers the advantage that a well-defined breaking surface is generated by exclusively effecting a shearing mechanism on one component of the pin tail only, the latter being sufficient to remove the pin tail consisting of the stem of the drive nut as a whole. Further, again, designing the drive nut as an element entirely separate from those elements remaining with the set fastener, it is possible to make the drive nut from a ferromagnetic material which can easily be retrieved by means of a magnetic sweep.

The fastener further comprises a deformable annular means for securing workpieces together having a head which is larger in diameter than the diameter of the aligned boreholes, an intermediate part adjacent to the head which has an outside diameter generally slightly smaller (but may also be slightly larger) than the diameter of the boreholes, such that the combined longitudinal lengths of the head and the intermediate-part is, when the fastener is set, at least equal to the combined thicknesses of the workpieces, and a deformable tail-part adjacent the intermediate-part and abutting the stem-head and having an outside diameter smaller than the diameter of the boreholes for securing the workpieces when the fastener is set. The head is essentially free of a cavity recess or cavities which are operative for gripping with a tool which will prevent rotation of the annular means. A reduced recess may be provided in the head for inspection of seating torque.

The improved fastener also comprises turning means in the outer-portion of the stem member for rotating the stem member relative to the drive-nut. The turning means and the drive-nut being operable for effecting the setting of the fastener by rotating the turning means relative to the drive-nut without the necessity for absolutely preventing any rotation of the annular means relative to the drive nut.

The fastener also contains a break groove in the stem member which has sufficient radial depth so that when the fastener is set, further turning of the stem member relative to the drive-nut will cause the stem member to break at the break groove. The break groove is located at a point on the stem member which is, when the fastener is set, substantially flush with the top outer surface of the head of the annular means.

Many of the prior art blind fasteners have a Phillips type recess in the annular head for gripping with a special tool as the outside-portion of the stem member or pin is rotated with the special tool. Frequently in the aerospace and aircraft industries, the annular heads of blind fasteners are generally very shallow in longitudinal depth. Because of this, Phillips-type or other type recesses tend to weaken the annular head. Furthermore, during the installation procedure the driving tool tends to "cam-out" the annular head thereby seriously weakening the strength of the fastener and preventing the completion of installation. In my invention however, the fastener can be set without the necessity for restraining the annular means from rotating by using a special tool and hence there is no need to have a Phillips-type recess or any type recess whatsoever in the annular head. In my invention the drive-nut translates rotary motion of the drive-nut into linear motion of the stem-head, thereby providing a number of advantages over many of the prior art blind fasteners. For example, installation may be accomplished with much lighter weight and low cost tooling. The shock loads common with pull-type fasteners experienced when the stem breaks are all eliminated in my fasteners. Because of the rotation of the stem member relative to the drive nut, the removable portion of the pin is broken off relatively smoothly and cleanly thereby eliminating stem recoil as experienced with pull-type fasteners and producing a joint having a higher preload retention.

Accordingly, a further embodiment of my fastener provides a turning means for rotating the stem member relative to the drive-nut using standard hand tools and without the necessity to use any bulky and specially designed tools for effecting the setting of the blind fastener.

In a further embodiment the head of my fastener has a substantially flat top and a conical surface so that the head can be flush-mounted with the accessible surface of an outer workpiece having a counter sunk borehole.

In another embodiment the annular means cannot be removed from the workpiece except by unscrewing or breaking the annular means. In still another further embodiment of my fastener, after the fastener is set, the annular means cannot be removed from the workpieces without breaking the annular means.

In still another embodiment the annular means is a single piece construction wherein the tail-part is gradient hardened and forms a bulbed configuration when the fastener is set.

In another embodiment the tail-part of the annular means is two-piece constructed having a first piece which is an annular nondeformable-piece and a second piece which is an annular deformable-piece. The nondeformable-piece is an extension of the intermediate-part of the annular means and is one-piece constructed therewith and has a conical chamfer on the end opposite the annular head which is operable as a wedge for deforming the deformable-piece. In a further embodiment, except for the chamfer, the inside and outside diameters of the nondeformable-piece are substantially equal to the inside and outside diameters of the intermediate-part of the annular means. The deformable-piece is separated from the nondeformable-piece and spaced longitudinally between the nondeformable-piece and the stem-head and abuts the stem-head and is adaptable, when the fastener is set, to deform the end of the deformable-piece adjacent the nondeformable-piece outwardly along the outside surface of the nonaccessible workpiece.

In another further embodiment the annular head has an annular cavity adjacent the outer surface and inside diameter thereof, the intermediate-part of the annular means has a shoulder-section adjacent the cavity, and a thinner-section adjacent the shoulder-section such that the inside diameter of the thinner-section is larger than the inside diameter of the shoulder-section. In this embodiment the stem-member has a removable-portion which comprises a turning means and the externally-threaded-portion, a plug-portion adjacent the removable-portion, and a tail-portion adjacent the plug-portion and comprising the stem-head. The plug-portion has an outer-section adjacent the break groove. The outer section also has an annular locking groove. The plug-portion also has an intermediate-section adjacent the outer-section and having an outside diameter slightly smaller than the inside diameter of the shoulder-section. Still further the plug-portion has an inner-section adjacent the intermediate-section, and having an outside diameter slightly smaller than the inside diameter of the thinner-section, such that, when the fastener is set, the intermediate-section abuts the shoulder-section and the inner-section abuts the thinner-section. This embodiment of the fastener further comprises an annular locking ring having a thick-segment which fits into the locking groove and abuts the shoulder-section, and a thin-segment adjacent the thick-segment which abuts the outer-section and the shoulder-section, such that, when the fastener is set, the locking ring is compressed into the locking groove and the space between the shoulder-section, the cavity, the outer-section and the drive-nut. In a still further embodiment the locking groove is immediately adjacent the intermediate-section.

In a further embodiment the inner-section extends into the tail-portion and is adjacent to the stem-head and the thinner-section extends over the entire longitudinal length of the tail-part and the inside diameter of the tail-part abuts the outside diameter of the inner-section and further wherein the tail-part is gradient-hardened so that when said fastener is set a bulbed configuration is formed against the unaccessible surface of the inner and nonaccessible workpiece.

In an alternative embodiment, the stem-head has an annular tapered section which is operable when said fastener is set, to flare the tail-part of the annular means radially against the outside surface of the nonaccessible workpiece.

In another embodiment of this invention the annular head has an annular cavity adjacent to the outer surface and inside diameter thereof, the inside and outside diameters of the intermediate-part of the annular means are equal to the inside and outside diameters respectively of the tail-part, wherein the stem member has a removable-portion, a plug-portion adjacent to the removable-portion, and a tail-portion adjacent to the plug-portion, wherein the removable-portion comprises the turning means and a part of the externally-threaded-section of the stem member, wherein the plug-portion comprises the remaining part of the externally-threaded-section of the stem member, and a part of an inner-section having an outside diameter slightly smaller than the inside diameter of the tail-part, the externally-threaded-portion being adjacent to one end of the inner section, the remaining part of the inner-section being adjacent to the stem-head. In this embodiment the fastener also comprises a threaded locking means having an inside diameter about equal to the outside diameter of the externally-threaded-section of the stem member, the outside diameter which abuts the inside diameter of the annular means, and a flange which fits into a recess of the annular head, such that, when the fastener is set, the locking means is compressed into the space between the externally-threaded-portion of the stem member, the inside diameter of the annular means, the cavity of the annular head and the drive-nut.

In another embodiment of this invention, the annular head has an annular recess adjacent the outside surface and inside diameter thereof comprising a chamfer at an acute angle to the axis of the fastener which begins at the inside diameter of the annular means, and an annular notch adjacent the chamfer and the top-outer surface of the annular head. The chamfer and annular notch forming a longitudinal-recess-surface in the annular means. The fastener in this embodiment also comprises an annular locking ring having an outer longitudinal- surface which is substantially identical to the longitudinal-recess-surface of the annular means and in abutting relationship to the longitudinal-recess-surface, having an inside diameter about equal to the outside diameter of the externally-threaded-portion of the stem member, and formed from a material that, when the fastener is set, is deformable into the threads of the externally-threaded-portion of the stem member. In this embodiment when the fastener is set, the locking ring is compressed into the space between the externally-threaded-portion of the stem member, the longitudinal-recess-surface, and the drive-nut.

In another embodiment of this invention the stem-member has an intermediate-portion having an outside diameter slightly smaller than the inside diameter of the intermediate-part of the annular means and the intermediate-portion has an annular locking groove positioned, when the fastener is set, near the accessible-surface of the outer-workpiece. This embodiment further comprises an annular locking ring having a thick-segment which fits into the locking groove and which abuts the inside diameter of the annular means, a thin-segment adjacent the thick segment which abuts the inside- diameter of the annular means, and which is formed from a material such that, when the fastener is set, the locking ring is compressed to the locking groove and the space between the inside diameter of the annular means, a recess in the annular head, and the drive-nut.

In another embodiment of this invention the stem member of the fastener has a removable-portion comprising the turning means and the externally-threaded-portion, a plug-portion adjacent the removable-portion, and a tail-portion adjacent the plug-portion which comprises the stem-head. The plug-portion contains an annular locking groove adjacent the externally-threaded-portion and, a second externally-threaded-section having an outside diameter larger than the outside diameter of the first-mentioned externally-threaded-portion and adjacent the locking groove. The annular head has an annular recess adjacent the outer surface and inside the diameter thereof. The intermediate-part of the annular means has an internally-threaded section adjacent the recess and extending into the tail-part. The internally-threaded-section is adapted to permit the annular means to be screwed on to the second externally-threaded-section of the stem-member. This embodiment of the fastener further comprises an annular locking ring having a thick segment which fits into the locking groove and abuts the internally-threaded-section of the annular means, and a thin-segment adjacent the thick-segment which also abuts the internally-threaded-section, and formed from a material such that, when the fastener is set, the locking ring is compressed into the locking groove and the space between the stem member, the recess of the annular head, and the drive-nut.

In another embodiment which is particularly useful the externally-threaded-portion of the stem member extends longitudinally to the stem-head. The annular head, the intermediate-part, and at least a part of the tail-part of the annular means is internally-threaded and adapted to permit the annular means to be screwed onto the externally-threaded-portion of the stem member.

In another embodiment of this invention the externally-threaded-portion of the stem member of the fastener extends, when the fastener is set, below the accessible surface of the outer workpiece, and the intermediate-part of the annular means has an internally-threaded-section adaptable to permit the annular means to be screwed onto the externally-threaded-portion of the stem member such that, when the fastener is set, the threads of the internally-threaded-section remain screwed onto a part of the externally-threaded-portion.

In another embodiment useful for all of the above-described embodiments, the break groove has a configuration which permits the stem member to be broken with a relatively-smooth break off surface and without pin recoil thereby enabling the set fastener to have a relatively high preload retention compared to blind fasteners employing a pull-type stem.

Furthermore in all embodiments of this invention it is not necessary that the drive-nut be removed from the stem member before the stem member is severed. Thus the drive-nut advantageously remains with the severed portion of the stem member so that it can be recovered by a magnetic sweep of the area. Thus in some embodiments the stem member is made from a nonmagnetic metal.

Many prior art fasteners which comprise a cavity or cavities in the head for engaging with the nose of a gripping tool, can not be made of aluminum or other soft metals because the annular head will cam-out. The fastener of this invention however can have the annular means made from an aluminum alloy or other soft metal since these fasteners do not contain such cavities. Thus the fasteners of this invention can have relatively thin heads as compared to fasteners which require cavities in the head to prevent rotation.

The fasteners of this invention are relatively inexpensive, can be adopted to have a flush stem- break, can be installed with lighter, less-expensive, standard hand-tools, have a higher clamp-up and preload retention, and can be installed where the free space on the accessible-side is relatively small. Furthermore some embodiments are stronger in fatigue and are believed to be stronger in lap shear than present fasteners. These advantages provide a distinct improvement over prior art blind fasteners.

### Brief Description of the Drawing

FIG. 1 is a partial cross-sectional view of one embodiment of a blind fastener of this invention.
FIG. 2 is a cross-sectional view of the fastener of FIG. 1 when the fastener is set.
FIG. 3 is a cross-sectional view of a second embodiment of a blind fastener of this invention.
FIG. 4 is a cross-sectional view of the fastener of FIG. 3 when the fastener is set.
FIG. 5 is a cross-sectional view of a third embodiment of a blind fastener of this invention.
FIG. 6 is a cross-sectional view of the fastener of FIG. 5 when the fastener is set.
FIG. 7 is a cross-sectional view of a fourth embodiment of a blind fastener of this invention.
FIG. 8 is a cross-sectional view of the fastener of FIG. 7 when the fastener is set.
FIG. 9 is a cross-sectional view of a fifth embodiment of a blind fastener of this invention.
FIG. 10 is a cross-sectional view of the fastener of FIG. 9 when the fastener is set.

### Description of the Preferred Embodiments

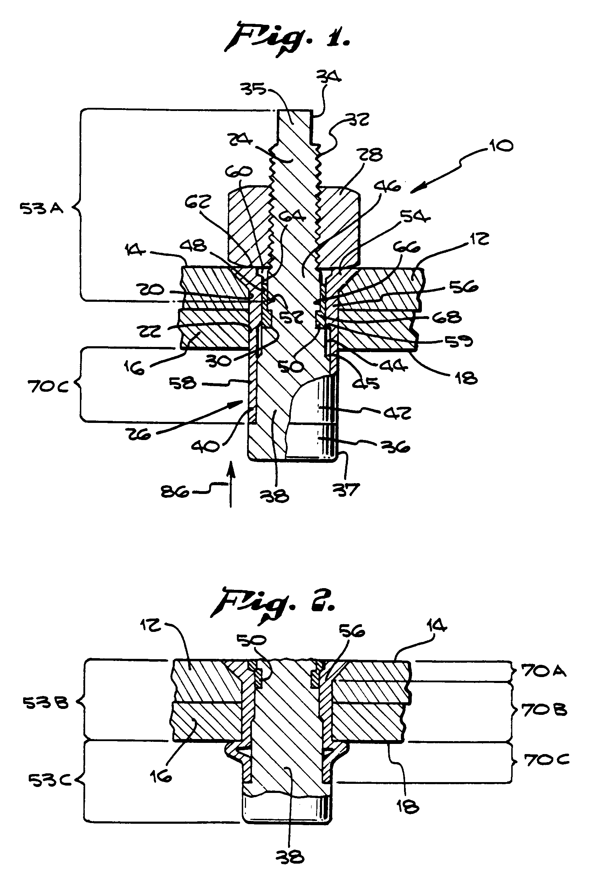

FIG. 1 is a partial cross-sectional view of a particular embodiment of a blind fastener of this invention. Referring to FIG. 1, fastener 10 is used to join outer and accessible workpiece 12 having accessible surface 14 and inner or nonaccessible workpiece 16 having nonaccessible surface 18. Fastener 10 is inserted through aligned boreholes 20 and 22 of the accessible and nonaccesible workpieces. The principal components of fastener 10 consists of stem member 24, annular means 26, drive nut 28, and annular locking ring 30.

Stem member 24 has an externally-threaded-section 32, turning means 34 having wrenching flats 34. Outside diameter 37 of stem-head 36 is just slightly smaller than the diameter of the boreholes 20 and 22. Stem member 24 also contains cylindrical inner-section 38 having outside diameter 40 which is smaller than the outside diameter 37 of stem-head 36. Adjacent to inner-section 38, is cylindrical intermediate-section 42 having outside diameter 44 which is smaller than outside diameter 40 of inner-section 38. Chamfer 45 provides a transition between section 38 and 42. Adjacent to intermediate-section 42, is a cylindrical outer-section 46 having an outside diameter 48 which is smaller than outside diameter 44. Outer-section 46 contains annular locking ring groove 50 and break groove 52. The minimum diameter of break groove 52 is smaller than the inside diameter of threaded section 32 and the inside diameter of locking groove 50.

In general, in all embodiments, the stem member contains the following principal parts: removable-portion 53A which extends from the break groove longitudinally outwards to the turning means; plug-portion 53B extending longitudinally, when the fastener is set, between the break groove and unaccessible surface 18; and tail-portion 53C which includes the stem-head and extends therefrom to, when fastener is set, unaccessible surface 18. Portions 53A, B and C of the stem member exist in all embodiments but are pointed out only in several of the FIGURES.

Annular means 26 comprises a head 54, which is shown as annular but is not necessarily always so, annular shoulder-section 56 and annular thinner-section 58. The inside diameter of annular thinner-section 58 is just slightly larger than outside diameter 40, and the outside diameter of thinner-section 58 is just slightly smaller than the diameter of boreholes 20 and 22. The outside diameter of shoulder-section 56 is the same as the outside diameter of thinner-section 58. The inside diameter of shoulder-section 56 is just slightly larger than the outside diameter of intermediate-section 42. Chamfer 59 provides a transition between section 56 and 58, and is designed to match chamfer 45. Annular means 26 also contains an annular recess 60 which is adjacent to the outer surface 62 and the inside diameter of shoulder-section 56.

Annular locking ring 30 is formed from a single piece of deformable material having an annular thin-segment 66 which is adjacent to an annular thick-segment 68. Locking ring 30 is disposed in locking groove 50 thereby requiring the locking ring to move with stem member 24. Locking ring 30, before the fastener is set, abuts on its outside diameter shoulder-section 56 of annular means 26 and on its inside diameter outer-section 46 of stem member 24.

In general in all embodiments the annular means contains the following principal parts: annular head 70A: intermediate-part 70B extending longitudinally from the annular head to, when the fastener is set, the nonaccessible surface 18; and tail-part 70C extending inwardly from the nonaccessible surface 18, when the fastener is set, to the nonaccessible extremity of the annular means. Parts 70A, B and C of the annular means exist in all embodiments but are pointed out only in several of the FIG'S.

When fastener 10 is set tail-part 70C of annular means 26 is deformed against lower and nonaccessible surface 18 of inner workpiece 16, as shown in FIG. 2, chamfer 45 of inner-section 38 is abutted up against chamfer 59 of shoulder-section 56, and locking ring 30 is compressed in locking groove 50 and deformed and compressed into recess 60 under drive-nut 28. Further rotation of stem member 24 relative to drive-nut 28 causes the stem to twist off and break relatively smoothly at break groove 52 without stem recoil thereby producing a joint having relatively high preload retention.

Tail-part 70C of annular means 26 preferably is gradient hardened so that tail-part 70C will be deformed into a bulbed configuration which is pressed over a substantial part of nonaccessible surface 18 of inner workpiece 16 as shown in FIG. 2 and FIG. 10 of another embodiment of this invention. Gradient hardening is well known in the art and forms no part of this invention.

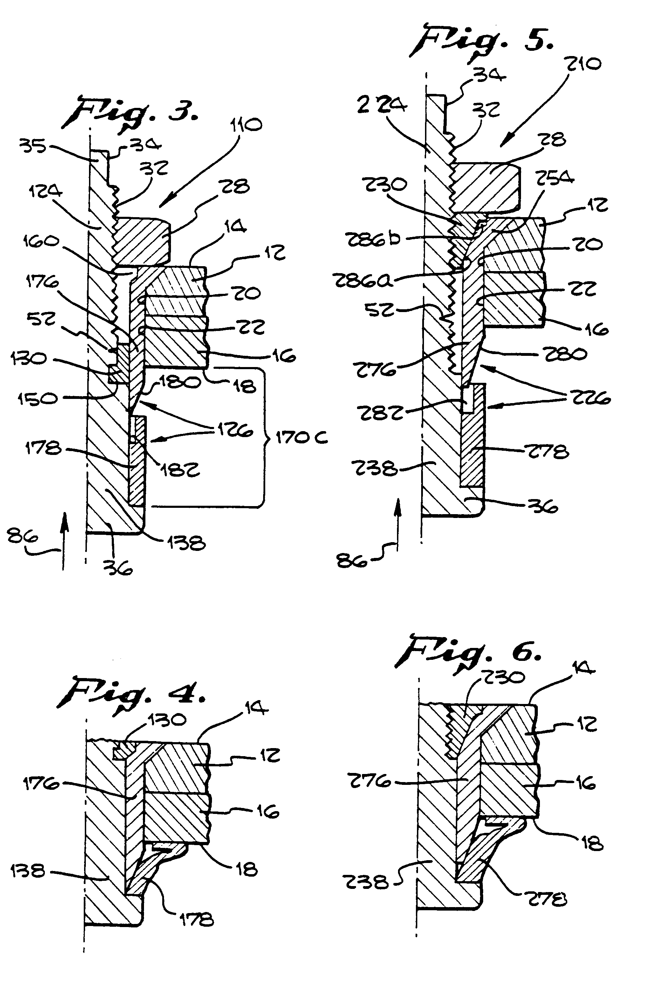

Turning now to FIG. 3, a second embodiment of this invention, depicted by fastener 110, is shown wherein the plug-portion of stem member 124 contains annular locking groove 150 which is adjacent to a inner-section 138 which has an outside diameter which is larger than the outside diameter of externally-threaded-portion 32. Annular means 126 comprises annular nondeformable-piece 176 and annular deformable-piece 178. Nondeformable-piece 176 contains chamfer 180 which abuts recess 182 in deformable-piece 178.

Annular locking ring 130 is similar in configuration and material to ring 30 of FIG. 1.

When fastener 110 is set, locking ring 130 is compressed into locking groove 150 and the space between stem member 124, recess 160 and drive-nut 28.

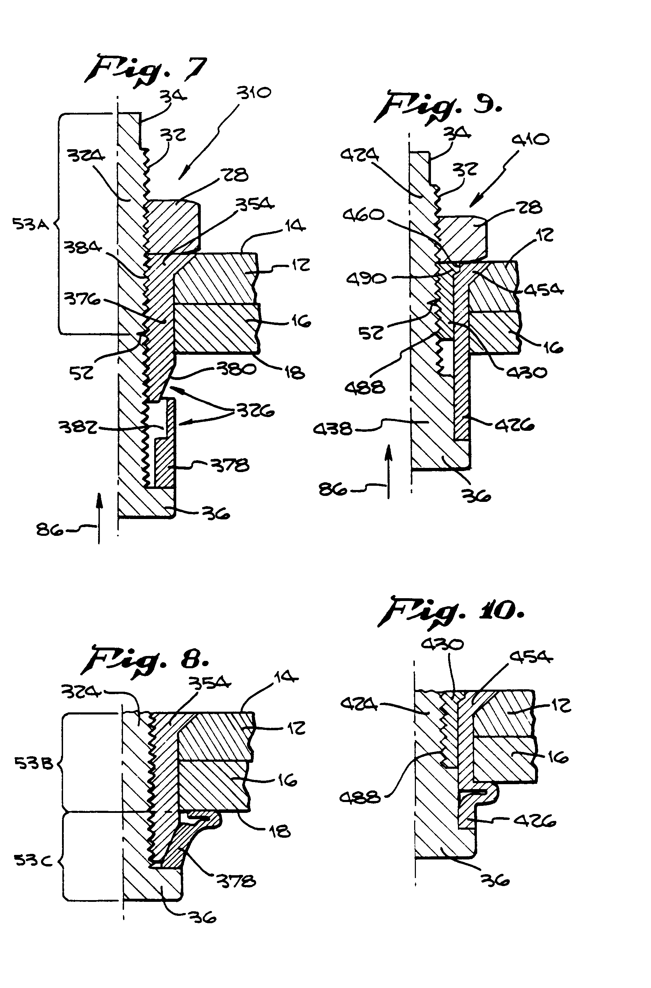

When fastener 110 is set, deformable piece 178 is deformed upwards and outwards against nonaccessible surface 18 of inner workpiece 18, as shown in FIG. 4. Deformation of piece 178 is achieved by gripping flat surfaces 34 of stem member 124 and drive-nut 28 with standard wrench, and by turning stem member 124 relative to drive-nut 28, causing stem member 124 to be pulled longitudinally outwardly through workpieces, in the direction of arrow 86, causing deformable piece 178 to engage chamfer 180 and be deformed upwards and outwards. As stem member 124 is further advanced the top portion of piece 178 engages lower surface 18 whereupon further advancement of stem 124 in the direction of arrow 86 causes piece 178 to be turned radially inwardly along surface 18. Further advancement of stem member 124 will cause fastener 110 to set so that piece 178 has been deformed upwardly and outwardly abutting a relatively wide annular area of surface 18, while locking ring 130 has been tightly compressed to locking groove 150 and recess 160. Further rotation of the stem member relative to the drive-nut causes the outer portion of stem member 124 to break smoothly and cleanly at break groove 52, without stem member recoil, thereby separating the outer-portion and drive-nut 28 from the plug-portion of stem member 124 and securing the workpieces as shown in FIG. 4.

Turning now to FIG. 5, a third embodiment of this invention, depicted by fastener 210, is shown wherein annular head 254 has an annular recess adjacent the outer surface and inside diameter thereof. The recess has annular chamfer 286a at an acute angle to the axis of the fastener which begins at the inside diameter of annular means 226. Annular notch 286b is adjacent to chamfer 286a and the top-outer surface of annular head 254. Chamfer 286a and notch 286b form a longitudinal-recessed- surface in annular means 226.

Fastener 210 contains annular locking ring 230 having an outer longitudinal surface which is substantially identical to the longitudinal-recessed-surface of annular means 226 and in abutting relationship thereto. Locking ring 230 has an internally threaded inside diameter adaptable for screwing onto externally-threaded-portion 32 of stem member 224.

Annular means 226 comprises annular nondeformable-piece 276 and annular deformable-piece 278. Nondeformable-piece 276 contains chamfer 280 which abuts recess 282 in deformable piece 278.

The tail-portion of stem member 224 contains stem-head 36 and inner-section 238 which extends into the plug-portion of the stem member. Inner-section 238 is adjacent to externally-threaded portion 32.

The inside diameter of piece 276 and 278 are equal, and are slightly larger than the outside diameter of inner-section 238. As with fastener 110, when fastener 210 is set, deformable piece 278 is deformed upwards and outwards against nonaccessible surface 18 as shown in FIG. 6. Setting of fastener 210 is achieved by gripping wrenching flats 34 of stem-member 224 and drive-nut 228 with standard wrenches and turning stem member 224 relative to drive-nut 228, thereby causing stem member 224 to be pulled longitudinally outwardly through the workpieces in the direction of arrow 86 causing piece 278 to engage chamfer 280 and be deformed upwards and outwards in the manner described with regard to fastener 110 in FIG. 4. When fastener 210 is set, locking ring 230 is compressed into the space between threads 32, the longitudinal-recess-surfaces formed by chamfer 286a and notch 286b, and drive-nut 28. After the fastener is set, further tightening causes the outer portion of stem member 224 to break smoothly and cleanly at break groove 52, without stem member recoil, thereby separating the outer portion of stem member 224 and drive-nut 28, and securing the workpieces as shown in FIG. 6.

A fourth embodiment of this invention is shown in FIG. 7 in which stem member 324 has externally-threaded-section 32 extending from the outer extremity of stem member 324 to stem head 36. Annular means 326 comprises annular non-deformable-piece 376 and annular deformable-piece 378. Piece 376 contains chamfer 380 which abuts recess 382 in piece 378. Piece 376 has internally-threaded-section 384 extending from outer surface of annular head 354 longitudinally along the plug-portion of piece 376. Internally-threaded-section 384 is adapted to be screwed onto externally-threaded-section 32 of stem member 324. Setting of fastener 310 is achieved by gripping wrenching flats 34 and drive-nut 28 thereby causing deformable-piece 378 to be deformed in the manner shown in FIG. 8. After fastener 310 is set, further turning of stem member 324 relative to drive-nut 28 causes stem member 324 to break smoothly and cleanly at break groove 52, without stem member recoil, thereby separating drive-nut 28 and outer-portion from the plug-portion of stem member 24 and thereby securing the workpieces as shown in FIG. 8.

A fifth embodiment of this invention is depicted by fastener 410 in FIG. 9. Stem member 424 comprises wrench flats 34, externally-threaded-section 32, break groove 52, stem-head 36 and cylindrical inner-section 438. Fastener 410 also comprises annular locking ring 430 having internally-threaded-section 488 which is adapted to be screwed onto threaded-section 32. Annular means 426 having annular head 454 is cylindrical in construction having one outside diameter and one inside diameter over both the intermediate-part and tail-part thereof. The inside diameter of the tail-part of annular means 426 is just slightly larger than the outside diameter of inner-section 438 of stem member 424. Annular head 454 contains annular recess 460. Annular ring 430 contains a flange- section 490 which has a contour matching recess 460. Fastener 410 is set using standard wrenches as described in other embodiments. Stem member 424 is then turned relative to drive-nut 28 thereby advancing the stem member in the direction of arrow 86 relative to the workpieces. The tail-part of annular means 426 is deformed in the manner described for the tail-part of fastener 10 shown in FIGS 1 and 2. Further advancement of stem member 424 causes locking ring 430 to be tightly compressed into recess 460 and the space between threaded-section 32, annular means 426 and drive-nut 28. Further rotation of stem member 424 relative to drive-nut 28 causes the outer-portion of the stem member to break smoothly and cleanly at break groove 52 without stem member recoil as in the other embodiments previously described and secures the workpieces as shown in FIG. 10.

A further embodiment of my invention, which is adaptable and useful on all previously described embodiments involves increasing the friction between the drive-nut and the outer top surface of the annular head of the annular means. This can be achieved by modifying either the surface of the drive-nut which is adjacent to the annular head, or the outer top surface of the annular head, or both surfaces. Nonlimiting examples of methods of modifying such surfaces are abrading, coating, and knurling.

It is known that if the drive-nut is allowed to be screwed down tighter and tighter against the head of the annular means as the fastener is set that a tensile force is induced in the stem member at the point at which the stem member exits the annular means and this tensile force will reduce the maximum torque that can be applied to the fastener and the gripping force of the fastener. This undesirable tensile force can be reduced by increasing the friction between the surfaces of the drive-nut and the annular head.

It is preferable in all the above-embodiments to rotate the stem member and hold the drive-nut stationery. However it is to be understood that the stem-member could be held stationary and the drive-nut rotated.

All the embodiments shown sever the stem member at the break groove smoothly and cleanly without stem member recoil, thereby producing joints having relatively high preload retention. Furthermore, the embodiments described herein do not require a special tool for gripping and pulling the removable portion of the stem member. Because a twisting motion is applied to the stem relative to the workpieces to sever the removable-portion of the stem member, rather than merely a tension pull, improved joints are produced. Some users of composite-type blind fasteners do not allow the use of pull-type fasteners because stem recoil damages the fibers of the installation making the invention attractive to such users. Furthermore, since standard tools may be used to set the fasteners of this invention a minimum of free space is required on the accessible side of the outer workpiece, thereby enabling the fasteners of this invention to be used where other types of blind fasteners can not.

The break off of the stem is generally at a point substantially flush with the surrounding surfaces of the accessible side of the installation. However, the term "substantially flush" as used herein means that the stem breaks off at a point that may be slightly above or below such surfaces.

Further embodiments of the invention are provided, wherein
said head has a substantially flat top and a conical surface so that said head can be mounted flush with the accessible surface of an outer workpiece having a countersunk borehole.
after said fastener is set, said annular means can not be removed from said workpiece except by breaking said annular means.
said annular means is a single piece and wherein said tail-part is gradient hardened and forms a bulbed configuration when said fastener is set.
said annular locking groove is adjacent said intermediate-section.
said stem-head has an annular tapered-section which is operable, when said fastener is set, to flare said tail-part of said annular means radially against the outside surface of the nonaccessible workpiece.
said break groove has a configuration which permits said stem member to be broken with a relatively smooth break-off surface and without pin recoil thereby enabling the set fastener to have a relatively high preload retention compared to blind fasteners employing a pull type stem.
the surface of said drive-nut which is adjacent to the outer top surface of the annular head is modified to increase the friction between said surfaces.
said annular means is made from an aluminum alloy.
said stem member is made from a nonmagnetic metal and said drive-nut is made of magnetic metal thereby permitting said severed part of said stem member, attached to said drive-nut, to be picked up magnetically when a magnet is used to pick up said drive-nut.
said stem member includes a stem head and said externally-threaded-portion of said stem member extends longitudinally to said stem-head; and
wherein said head, said intermediate-part, and at least a part of said tail-part of said annular means is internally-threaded permitting said annular means to be screwed onto said externally-threaded-portion of said stem member.
said externally-threaded-portion of said stem member extends, when said fastener is set, below the accessible surface of said outer workpiece; and
wherein said intermediate-part of said annular means has an internally-threaded-section which permits said annular means to be screwed onto said externally-threaded-portion of said stem member such that, when said fastener is set, the threads of said internally-threaded-section remains screwed onto a part of said externally-threaded-portion.
the surface of said drive-nut which is adjacent to the outer top surfaces of said head is modified to increase the friction between said surfaces.
said surface of said drive-nut is knurled.

While it will be apparent that the preferred embodiment disclosed herein offers distinct advantages over prior art fasteners, the tail-part of the annular means depicted in FIGS. 2 and 10 can be substituted for the tail-part of FIGS. 4, 6, 8 and 12 if desired and vice versa.

## Claims

1. A blind fastener (10; 110; 210; 310; 410) for mounting in aligned openings (20, 22) through workpieces (12, 16) to connect them together in overlapping outer and inner relation and adapted to be set by wrench means for applying torque, the fastener (10; 110; 210; 310; 410) comprising:
- a generally tubular fastener body (26; 176; 276; 376) extending axially within said openings (20, 22) in said workpieces (12, 16), said fastener body (26; 176; 276; 376) having
- a bore extending axially through said fastener body (26; 176; 276; 376) and
- an enlarged body head (54; 254; 354; 454) for engaging said outer workpiece (12);
- an externally threaded cylindrical stem (24; 124; 224; 324; 424) passing through said fastener body (26; 176; 276; 376), said stem (24; 124; 224; 324; 424) having
- an enlarged stem head (36) spaced inwardly from the inner end of said fastener body (26; 176; 276; 376) and
- a holding region spaced outwardly from said body head (54; 254; 354; 454), said holding region being provided with a wrench engaging region (34);
- a deformable sleeve (58; 178; 278; 378; 426) around said stem (24; 124; 224; 324; 424) in contact with said stem head (36), said stem being movable (24; 124; 224; 324; 424) outwardly through said fastener body (26; 176; 276; 376) to deform said sleeve (58; 178; 278; 378; 426) to a fully set condition in overlying contact with the inner surface (18) of said inner workpiece (16);
- a break groove (52) in said stem (24; 124; 224; 324; 424) at an axial location positioned substantially flush with an outer surface (14) of said body head (54; 254; 354; 454) when said sleeve (58; 178; 278; 378; 426) is fully set, an outer portion (53A) of said stem (24; 124; 224; 324; 424) being separable from remaining inner portions (53B, 53C) of said stem (24; 124; 224; 324; 424) at said break groove (52) by continued application of turning force to said fastener (10; 110; 210; 310; 410) after said sleeve (58; 178; 278; 378; 426) is fully set, said outer portion (53A) of said stem (24; 124; 224; 324; 424) extending outwardly of said break groove (52);
characterized by
- a drive nut (28) threadedly mounted on said stem (24; 124; 224; 324; 424) adjacent said body head (54; 254; 354; 454), said nut (28) having external wrench engaging surfaces and being separate from said fastener body (26; 176; 276; 376) and being able to frictionally contact said body head (54; 254; 354; 454) to restrain said fastener body (26; 176; 276; 376) from rotating in said openings (20, 22) in said workpieces (12, 16) when said stem (24; 124; 224; 324; 424) is rotated, said drive nut (28) and said wrench engaging region (34) being adapted for concurrent engagement by said wrench means for holding said drive nut (28) against rotation and for turning said stem (24; 124; 224; 324; 424) relative to said drive nut (28) in one direction, wherein turning motion of said stem (24; 124; 224; 324; 424) relative to said drive nut (28) in said one direction moves said stem (24; 124; 224; 324; 424) in an axially outward direction through said fastener body (26; 176; 276; 376);
- said outer portion (53A) of said stem (24; 124; 224; 324; 424), extending through said nut (28), and being separable from said inner portions (53B, 53C) with said nut (28) entirely attached.

2. The blind fastener of claim 1, characterized by locking ring means (30; 130; 230; 376; 430) for retaining said stem (24; 124; 224; 324; 424) in engagement with said fastener body (26; 176; 276; 376;) to prevent said stem (24; 124; 224; 324; 424) from moving inwardly of said fastener body (26; 176; 276; 376;) and to maintain clamping force upon said workpieces (12, 16) after twisting off of said outer portion (53A) of said stem (24; 124; 224; 324; 424).

3. The blind fastener of claims 1 or 2, characterized by
- an enlarged annular recess (60; 160; 286A, 286B) in said body head (54; 254; 454) around an outer opening of said bore extending through said fastener body (26; 176; 276; 376);
- said drive nut (28) overlying said enlarged annular recess (60; 160; 286A, 286B);
- an intermediate position of said stem (24; 124; 224; 424) spaced radially from an inside of said bore through said fastener body (26; 176; 276; 376) to provide an annular channel therebetween extending axially between end planes being constituted by a radial shoulder of said stem (24; 124; 224; 424) and said nut (28), respectively;
- said annular locking ring (30; 130; 230; 430) extending within said annular channel, the axial length of said annular channel being greater than that of said annular locking ring, such that when torque is applied to said stem (24; 124; 224; 424), thereby advancing an outer end of said annular locking ring (30; 130; 230; 430) into abutment with one of said end planes, further turning off said stem (24; 124; 224; 424) deforming said locking ring (30; 130; 230; 430) to fill said annular recess (60; 160; 286A, 286B).

4. The blind fastener of claim 3, characterized by said annular locking ring (30; 130) being axially keyed to said stem (24; 124) on said radial shoulder.

5. The blind fastener of claim 4, characterized by said locking ring (30; 130) being provided with an annular thick shoulder segment (68) at its inner circumference, said segment (68) fitting into an annular locking ring groove (50; 150) within said stem (24; 124).

6. The blind fastener of claim 3, characterized by said annular locking ring (230; 430) being mounted on said stem (224; 424) in abutment to said nut (28) and to said enlarged annular recess (286A, 286B).

7. The blind fastener of claim 6, characterized by said enlarged annular recess being shaped as an annular chamfer (286A) mating said annular locking ring (230), said chamfer (286A) being provided with an annular notch (286B) at its upper end.

8. The blind fastener of claims 6 or 7, characterized by said annular locking ring (230; 430) being threadedly mounted on said stem (224; 424).

9. The blind fastener of any of claims 1 through 8, characterized by
- said fastener body (26) having a deformable tail region (58, 70C; 426) projecting beyond the inner surface (18) of said inner workpiece (16);
- said stem (24; 424) having an enlarged stem head (36) at the inner end of said stem (24; 424) in contact with the inner end of said deformable tail region (58, 70C; 426).

10. The blind fastener of any of claims 1 through 8, characterized by
- said fastener body (176; 276; 376) having a rigid tail (180; 280; 380) projecting inwardly beyond said inner workpiece (16);
- a deformable sleeve (178; 278; 378) separate from said fastener body (176; 276; 376) around said stem (124; 224; 324) in contact with said stem head (36).

11. The blind fastener of any of claims 1 through 10, characterized by
- first means on said fastener body (26) and second means on said stem (24) for cooperating together to prevent further relative axial motion of said stem (24) outwardly of said fastener body (26) when said break groove (52) has reached the outer surface (62) of said body head (54), thereby ensuring that further application of torque to said stem (24) twists off said stem (24) in substantially flush relation to the outer surface (62) of said body head (54).

12. The blind fastener of claim 11, characterized by said first means comprising a radially inwardly extending shoulder (59) on said fastener body (26), and said second means comprising a radially outwardly extending shoulder (45) on said stem (24), said shoulders (45, 59) moving into abutting contact to block further relative movement of said stem (24) in the outward direction through said fastener body (26) when said break groove (52) moves into substantially flush relation to the outer surface (62) of said body head (54).

13. The blind fastener of any of claims 1 through 12, characterized by said drive nut (28) being made of magnetic material and said fastener body (26; 176; 276; 376) being made of non-magnetic material.

14. The blind fastener of any of claims 1 through 13, characterized by at least one of said drive nut (28) and said body head (54; 254; 354; 454) being knurled to increase the friction between said drive nut (28) and said body head (54; 254; 354; 454).

15. The blind fastener of any of claims 1 through 13, characterized by at least one of said drive nut (28) and said body head (54; 254; 354; 454) being abraded to increase the friction between said drive nut (28) and said body head (54; 254; 354; 454).

16. A method of fastening overlapped outer and inner workpieces (12, 16) using a fastener (10; 110; 210; 310; 410) of the type having a generally tubular fastener body (26; 176; 276; 376) having an enlarged body head (54; 254; 354; 454), a deformable sleeve (58; 178; 278; 378; 426) at an end of said fastener body (26; 176; 276; 376) opposite from said body head (54; 254; 354; 454), and an externally threaded stem (24; 124; 224; 324; 424) extending through aligned bores in said sleeve (58; 178; 278; 378; 426) and said fastener body (26; 176; 276; 376), said stem (24; 124; 224; 324; 424) being provided with a break groove (52) between inner and outer regions of said stem (24; 124; 224; 324; 424), the method comprising the steps of:
- inserting said fastener (10; 110; 210; 310; 410) through aligned openings (20, 22) in said workpieces (12, 16) to be fastened together until said body head (54; 254; 354; 454) engages an outer surface (14) of said outer workpiece (12) with said sleeve (58; 178; 276; 378; 426) positioned beyond an inner surface (18) of said inner workpiece (16);
- applying torque to an outer portion (53A) of said stem (24; 124; 224; 324; 424) to turn said stem (24; 124; 224; 324; 424) in said one direction until said sleeve (58; 178; 278; 378; 426) has been bulged laterally to a fully set condition overlying said inner surface (18) of said inner workpiece (16), and said break groove (52) has moved outwardly to a position in substantially flush relation with an outer surface (62) of said body head (54; 254; 354; 454) as said sleeve (58; 178; 278; 378; 426) has become fully set;
- continuing to apply torque to said stem (24; 124; 224; 324; 424) to shear off said outer portion (53A) of said stem (24; 124; 224; 324; 424) at said break groove (52),
characterized by the further steps of:
- screwing a drive nut (28) on said outer portion (53A) of said stem (24; 124; 224; 324; 424) prior to inserting said fastener (10; 110; 210; 310; 410) through said aligned openings (20, 22);
- gripping said drive nut (28) to hold it against rotation, while applying torque to said outer portion (53A) to shear off said outer portion (53A) with said drive nut (28) still attached to said outer portion (53A) of said stem (24; 124; 224; 324; 424).

17. The method of claim 16, characterized by said drive nut (28) being made of magnetic material, said stem (24; 124; 224; 324; 424) being made of non-magnetic material and said sheared-off outer portion (53A) of said stem (24; 124; 224; 324; 424) and said attached entire drive nut (28) being recovered by means of a magnetic sweep.

## Patentansprüche

1. Blindniet (10; 110; 210; 310; 410) zum Anordnen in miteinander fluchtenden Durchgangsöffnungen (20, 22) von Werkstücken (12, 16), um diese in inwärtig und auswärtig überlappender Anordnung miteinander zu verbinden, wobei die Blindniet (10; 110; 210; 310; 410) mittels Verdrehmitteln zum Aufbringen eines Drehmomentes anziehbar ist und umfaßt:
- einen im wesentlichen rohrförmigen Nietkörper (26; 176; 276; 376), der sich in axialer Richtung innerhalb der Durchgangsöffnungen (20, 22) in den Werkstücken (12, 16) erstreckt, wobei der Nietkörper (26; 176; 276, 376) aufweist
- eine Durchgangsbohrung, die sich in axialer Richtung durch den Nietkörper (26; 176; 276; 376) hindurch erstreckt und
- einen vergrößerten Körperkopf (54; 254; 354; 454) zur Anlage an dem äußeren Werkstück (12);
- einen mit einem Außengewinde versehenen zylindrischen Bolzen (24; 124; 224; 324; 424), der sich durch den Nietkörper (26; 176; 276; 376) hindurch erstreckt, wobei der Bolzen (24; 124; 224; 324; 424) aufweist
- einen vergrößerten Bolzenkopf (36), der nach innen gerichtet vom inneren Ende des Nietkörpers (26; 176; 276; 376) beabstandet ist und
- einen Haltebereich, der nach außen gerichtet vom Körperkopf (54; 254; 354; 454) beabstandet ist, wobei der Haltebereich mit einem Angriffsbereich (34) für die Verdrehmittel versehen ist;
- eine verformbare Hülse (58; 178; 278; 378; 426), die den Bolzen (24; 124; 224; 324; 424) umgibt und den Bolzenkopf (36) berührt, wobei der Bolzen (24; 124; 224; 324; 424) nach außen gerichtet durch den Nietkörper (26; 176; 276; 376) hindurch bewegbar ist, um die Hülse (58; 178; 278; 378; 426) in einen vollkommen angezogenen Zustand zu verformen, in dem sie auf der inneren Oberfläche (18) des inneren Werkstücks (16) aufliegt;
- eine Sollbruchkerbe (52) im Bolzen (24; 124; 224; 324; 424) an einer axialen Position, die im wesentlichen mit einer äußeren Oberfläche (14) des Körperkopfes (54; 254; 354; 454) fluchtet, wenn die Hülse (58; 178; 278; 378; 426) vollkommen angezogen ist, wobei ein äußerer Abschnitt (53a) des Bolzens (24; 124; 224; 324; 424) von verbleibenden inneren Abschnitten (53b, 53c) des Bolzens (24; 124; 224; 324; 424) an der Sollbruchkerbe (52) trennbar ist, und zwar infolge einer weiteren Beaufschlagung der Blindniet (10; 110; 210; 310; 410) mit Drehkraft, nachdem die Hülse (58; 178; 278; 378; 426) vollkommen angezogen wurde, wobei der äußere Abschnitt (53a) des Bolzens (24; 124; 224; 324; 424) sich nach außen gerichtet von der Sollbruchkerbe (52) weg erstreckt;
gekennzeichnet durch
- eine Anziehmutter (28), die angrenzend an den Körperkopf 854; 254; 354; 454) auf den Bolzen (24; 124; 224; 324; 424) aufgeschraubt ist, wobei die Mutter (28) äußere Angriffsflächen für die Verdrehmittel aufweist und getrennt vom Nietkörper (26; 176; 276; 376) ist und ferner in der Lage ist, am Körperkopf (54; 254; 354; 454) unter Reibung anzuliegen, um den Nietkörper (26; 176; 276; 376) am Drehen in den Durchgangsöffnungen (20, 22) in den Werkstücken (12, 16) zu hindern, wenn der Bolzen (24; 124; 224; 324; 424) gedreht wird, wobei die Anziehmutter (28) und der Angriffsbereich (34) für die Verdrehmittel für ein gemeinsames Ergreifen mittels der Verdrehmittel ausgelegt sind, um die Anziehmutter (28) gegen Verdrehung festzuhalten und den Bolzen (24; 124; 224; 324; 424) relativ zur Anziehmutter (28) in einer Richtung zu verdrehen, wobei eine Drehbewegung des Bolzens (24; 124; 224; 324; 424) relativ zur Anziehmutter (28) in der einen Richtung den Bolzen (24; 124; 224; 324; 424) in einer axial nach außen gerichteten Richtung durch den Nietkörper (26; 176; 276; 376) bewegt;
- den äußeren Abschnitt (53a) des Bolzens (24; 124; 224; 324; 424), der sich durch die Mutter (28) hindurch erstreckt und von inneren Abschnitten (53b, 53c) trennbar ist, wobei die Mutter (28) sich vollständig an ihm befindet.

2. Blindniet nach Anspruch 1, gekennzeichnet durch Rastringmittel (30; 130; 230; 376; 430), um den Bolzen (24; 124; 224; 324; 424) in Eingriff mit dem Nietkörper (26; 176; 276; 376) festzuhalten, um zu verhindern, daß der Bolzen (24; 124; 224; 324; 424) sich nach innen gerichtet zum Nietkörper (26; 176; 276; 376) bewegt, um die Klammerkraft zwischen den Werkstücken (12, 16) aufrechtzuerhalten, nachdem der äußere Abschnitt (53a) des Bolzens (24; 124; 224; 324; 424) abgedreht wurde.

3. Blindniet nach Anspruch 1 oder 2, gekennzeichnet durch:
- eine vergrößerte, ringförmige Ausnehmung (60; 160; 286a, 286b) im Körperkopf (54; 254; 454) um eine äußere Öffnung der Bohrung herum, die sich durch den Nietkörper (26; 176; 276; 376) hindurch erstreckt;
- die Anziehmutter (28), die sich über die vergrößerte, ringförmige Ausnehmung (60; 160; 286a, 286b) hinweg erstreckt;
- eine Zwischenstellung des Bolzens (24; 124; 224; 424), die radial von einer Innenseite der Bohrung durch den Nietkörper (26; 176; 276; 376) beabstandet ist, um einen ringförmigen Kanal dazwischen zu bilden, der sich axial zwischen Endflächen erstreckt, die durch eine radiale Schulter des Bolzens (24; 124; 224; 424) bzw. die Mutter (28) gebildet werden;
- den Rastring (30; 130; 230, 430), der sich im ringförmigen Kanal erstreckt, wobei die axiale Länge des ringförmigen Kanals größer ist als die des Rastringes, so daß, wenn ein Drehmoment auf den Bolzen (24; 124; 224; 424) ausgeübt wird, ein äußeres Ende des Rastringes (30; 130; 230; 430) in Anlage mit einer der Endflächen vorgeschoben wird, wobei ein Abdrehen des Bolzens (24; 124; 224; 424) den Rastring (30; 130; 230; 430) so verformt, daß er die ringförmige Ausnehmung (60; 160; 286a, 286b) ausfüllt.

4. Blindniet nach Anspruch 3, dadurch gekennzeichnet, daß der Rastring (30; 130) in axialer Richtung am Bolzen (24; 124) auf der radialen Schulter verkeilt ist.

5. Blindniet nach Anspruch 4, dadurch gekennzeichnet, daß der Rastring (30; 130) an seinem inneren Umfang mit einem ringförmigen dicken Schultersegment (68) versehen ist, das in eine Rastringnut (50; 150) im Bolzen (24; 124) paßt.

6. Blindniet nach Anspruch 3, dadurch gekennzeichnet, daß der Rastring (230; 430) auf dem Bolzen (224; 424) in Anlage an der Mutter (28) und der vergrößerten ringförmigen Ausnehmung (286a, 286b) angeordnet ist.

7. Blindniet nach Anspruch 6, dadurch gekennzeichnet, daß die vergrößerte ringförmige Ausnehmung als ringförmige Abschrägung (286a) ausgebildet ist, die an den Rastring (230) angepaßt ist, wobei die Abschrägung (286a) mit einer Ringnut (286b) an ihrem oberen Ende versehen ist.

8. Blindniet nach Anspruch 6 oder 7, dadurch gekennzeichnet, daß der Rastring (230; 430) auf den Bolzen (224; 424) aufgeschraubt ist.

9. Blindniet nach einem der Ansprüche 1 bis 8, gekennzeichnet durch
- den Nietkörper (26), der einen verformbaren Endabschnitt (58, 70c; 426) aufweist, welcher über die innere Oberfläche (18) des inneren Werkstücks (16) vorsteht;
- den Bolzen (24; 424), der einen vergrößerten Bolzenkopf (36) am inneren Ende des Bolzens (24; 424) in Berührung mit dem inneren Ende des verformbaren Endabschnittes (58, 70c; 426) aufweist.

10. Blindniet nach einem der Ansprüche 1 bis 8, gekennzeichnet durch
- den Nietkörper (176; 276; 376), der ein starres Ende (180; 280; 380) aufweist, welches nach innen über das innere Werkstück (16) vorsteht;
- eine verformbare Hülse (178; 278; 378), die vom Nietkörper (176; 276; 376) getrennt ist, und sich um den Bolzen (124; 224; 324) herum in Berührung mit dem Bolzenkopf (36) befindet.

11. Blindniet nach einem der Ansprüche 1 bis 10, gekennzeichnet durch
- erste Mittel auf dem Nietkörper (26) und zweite Mittel auf dem Bolzen (24), die miteinander wechselwirken, um eine weitere relative Axialbewegung des Bolzens (24) aus dem Nietkörper (26) heraus zu verhindern, wenn die Sollbruchkerbe (52) die äußere Oberfläche (62) des Körperkopfes erreicht hat, wodurch gewährleistet wird, daß ein weiteres Aufbringen von Drehmoment auf den Bolzen (24) den Bolzen (24) in einer im wesentlichen fluchtenden Anordnung zur äußeren Oberfläche (62) des Körperkopfs (54) abdreht.

12. Blindniet nach Anspruch 11, dadurch gekennzeichnet, daß die ersten Mittel eine sich radial nach innen erstreckende Schulter (59) am Nietkörper (26) und die zweiten Mittel eine sich radial nach außen erstreckende Schulter (54) am Bolzen (24) umfassen, wobei die Schultern (45, 59) sich in eine Anlage zueinander bewegen, um eine weitere Relativbewegung des Bolzens (24) in einer nach außen gerichteten Richtung durch den Nietkörper (26) hindurch zu verhindern, wenn die Sollbruchkerbe (52) sich in eine im wesentlichen fluchtende Lage zur äußeren Oberfläche (62) des Körperkopfes (54) bewegt hat.

13. Blindniet nach einem der Ansprüche 1 bis 12, dadurch gekennzeichnet, daß die Anziehmutter (28) aus einem magnetischen Material und der Nietkörper (26; 176; 276; 376) aus einem nicht-magnetischen Material besteht.

14. Blindniet nach einem der Ansprüche 1 bis 13, dadurch gekennzeichnet, daß mindestens die Anziehmutter (28) oder der Körperkopf (54; 254; 354; 454) gerieft ist, um die Reibung zwischen der Anziehmutter (28) und dem Körperkopf (54; 254; 354; 454) zu erhöhen.

15. Blindniet nach einem der Ansprüche 1 bis 13, dadurch gekennzeichnet, daß mindestens die Anziehmutter (28) oder der Körperkopf (54; 254; 354; 454) aufgerauht ist, um die Reibung zwischen der Anziehmutter (28) und dem Körperkopf (54; 254; 354; 454) zu erhöhen.

16. Verfahren zum Befestigen von äußeren und inneren Werkstücken (12, 16) miteinander unter Verwendung einer Niet (10; 110; 210; 310; 410) mit einem im wesentlichen rohrförmigen Nietkörper (26; 176; 276; 376), der einen vergrößerten Körperkopf (54; 254; 354; 454) sowie eine verformbare Hülse (58; 178; 278; 378; 426) an einem Ende des Nietkörpers (26; 176; 276; 376) entgegengesetzt dem Körperkopf (54; 254; 354; 454) aufweist, und mit einem mit einem Außengewinde versehenen Bolzen (24; 124; 224; 324; 424), der sich durch miteinander fluchtende Durchgangsöffnungen in der Hülse (58; 178; 278; 378; 426) und den Nietkörper (26; 176; 276; 376) hindurch erstreckt, wobei der Bolzen (24; 124; 224; 324; 424) mit einer Sollbruchkerbe (52) zwischen inneren und äußeren Abschnitten des Bolzens (24; 124; 224; 324; 424) versehen ist, wobei das Verfahren die folgenden Schritte umfaßt:
- Einführen der Niet (10; 110; 210; 310; 410) durch miteinander fluchtende Öffnungen (20, 22) in den aneinander zu befestigenden Werkstücken (12, 16), bis der Körperkopf (54; 254; 354; 454) eine äußere Oberfläche (14) des äußeren Werkstücks (12) erfaßt, wobei die Hülse (58; 178; 276; 378; 426) jenseits einer inneren Oberfläche (18) des inneren Werkstücks (16) angeordnet ist;
- Aufbringen eines Drehmoments auf einen äußeren Abschnitt (53a) des Bolzens (24; 124; 224; 324; 424) um den Bolzen (24; 124; 224; 324; 424) in der einen Richtung zu drehen, bis die Hülse (58; 178; 278; 378; 426) seitlich in einen vollständig angezogenen Zustand ausgebeult wurde, wobei sie auf der inneren Oberfläche (18) des inneren Werkstücks (16) aufliegt, und die Sollbruchkerbe (52) sich nach außen in eine Position bewegt hat, in der sie im wesentlichen mit einer äußeren Oberfläche (62) des Körperkopfes (54; 254; 354; 454) fluchtet, wenn die Hülse (58; 178; 278; 378; 426) vollkommen angezogen ist;
- weiteres Aufbringen von Drehmoment auf den Bolzen (24; 124; 224; 324; 424) um den äußeren Abschnitt (53a) des Bolzens (24; 124; 224; 324; 424) an der Sollbruchkerbe (52) abzuscheren,
gekennzeichnet durch die weiteren Schritte:
- Schrauben einer Anziehmutter (28) auf den äußeren Abschnitt (53a) des Bolzens (24; 124; 224; 324; 424) vor dem Einführen der Niet (10; 110; 210; 310; 410) durch die miteinander fluchtenden Durchgangsöffnungen (20, 22) hindurch;
- Ergreifen der Anziehmutter (28), um sie gegen Verdrehung festzuhalten, während Drehmoment auf den äußeren Abschnitt (53a) aufgebracht wird, um den äußeren Abschnitt (53a) abzudrehen, während sich die Anziehmutter (28) immer noch an dem äußeren Abschnitt (53a) des Bolzens (24; 124; 224; 324; 424) befindet.

17. Verfahren nach Anspruch 16, dadurch gekennzeichnet, daß die Anziehmutter (28) aus einem magnetischen Material und der Bolzen (24; 124, 224; 324; 424) aus einem nichtmagnetischen Material hergestellt ist und daß der abgescherte äußere Abschnitt (53a) des Bolzens (24; 124; 224; 324; 424) und die daran angeordnete Anziehmutter (28) mittels eines magnetischen Besens aufgesammelt werden.

## Revendications

1. Rivet aveugle (10;110;210;310;410) servant à être monté dans des ouvertures alignées (20,22) ménagées à travers des pièces mécaniques (12,16) pour les relier par chevauchement extérieur et intérieur et prévu pour être mis en place grâce à des moyens exerçant une torsion pour appliquer un couple, le rivet (10;110;210;310;410) comportant :
- un corps de rivet de forme générale tubulaire (26;176;276;376) s'étendant axialement à l'intérieur desdites ouvertures (20,22) dans lesdites pièces mécaniques (12;16), ledit corps de rivet (26;176;276;376) présentant :
- un alésage s'étendant axialement à travers ledit corps de rivet (26;176;276;376), et
- une tête de corps agrandie (54;254;354; 454) pour s'engager sur ladite pièce mécanique extérieure
(12); - une tige cylindrique filetée à l'extérieur (24;124;224;324;424) traversant ledit corps de rivet (26;176;276;376), ladite tige (24;124;224; 324;424) présentant :
- une tête de tige agrandie (36) écartée intérieurement de l'extrémité intérieure dudit corps de rivet (26;176;276;376) et
- une zone de maintien écartée extérieurement de ladite tête de corps (54;254;354; 454), ladite zone de maintien comportant une zone (34) pour l'engagement par torsion;
- un manchon déformable (58;178;278;378;426) autour de ladite tige (24;124;224;324;424) et en contact avec ladite tête de tige (36), ladite tige pouvant être déplacée (24;124;224;324;424) extérieurement à travers ledit corps de rivet (26;176;276;376) pour déformer ledit manchon (58;178;278;378;426) pour qu'il atteigne une condition de mise en place totale en contact par recouvrement de la surface intérieure (18) de ladite pièce intérieure mécanique (16);
- une rainure de rupture (52) située sur ladite tige (24;124;224;324;424) à un endroit axial placé globalement au niveau d'une surface extérieure (14) de ladite tête de corps (54;254;354;454) lorsque ledit manchon (58;178;278;378;426) est totalement mis en place, une partie extérieure (53A) de ladite tige (24;124;224;324;424) pouvant être séparée des parties intérieures restantes (53B,53C) de ladite tige (24;124;224;324;424) à l'endroit de ladite rainure de rupture (52) par l'application continue d'une force de rotation audit rivet (10;110;210;310;410) après que ledit manchon (58;178;278;378;426) a été totalement mis en place, ladite partie extérieure (53A) de ladite tige (24;124;224;324;424) s'étendant vers l'extérieur de ladite rainure de rupture (52);
caractérisé par
- un écrou d'entraînement (28) monté par vissage sur ladite tige (24;124;224;324;424) de manière adjacente à ladite tête de corps (54;254;354;454), ledit écrou (28) portant des surfaces extérieures d'engagement par torsion et étant séparé dudit corps de rivet (26;176;276;376) et pouvant entrer en contact par friction avec ladite tête de corps (54.254;354;454) pour limiter la rotation dudit corps de rivet (26;176;276;376) dans lesdites ouvertures (20,22) ménagées dans lesdites pièces mécaniques (12,16) lorsque ladite tige (24;124;224;324;424) est tournée, ledit écrou d'entraînement (28) et ladite zone d'engagement par torsion (34) étant adaptées pour permettre une prise simultanée dudit moyen de torsion pour empêcher la rotation dudit écrou d'entraînement (28) et pour tourner ladite tige (24;124;224;324;424) par rapport audit écrou d'entraînement (28) dans une direction, où le mouvement de rotation de ladite tige (24;124;224;324;424) par rapport audit écrou d'entraînement (28) dans ladite direction déplace ladite tige (24;124;224;324;424) dans une direction axialement extérieure à travers ledit corps de rivet (26;176;276;376);
- ladite partie extérieure (53A) de ladite tige (24;124;224;324;424) s'étendant à travers ledit écrou (28) et étant séparable desdites parties intérieures (53B,53C) avec ledit écrou (28) entièrement fixé.

2. Rivet aveugle selon la revendication 1, caractérisé par des moyens formant anneau de serrage (30;130;230;376;430) pour maintenir ladite tige (24;124;224;324;424) en prise avec ledit corps de rivet (26;176;276;376) et empêcher ladite tige (24;124;224;324;424) de se déplacer à l'intérieur dudit corps de rivet (26;176;276; 376) et pour maintenir une force de serrage sur lesdites pièces mécaniques (12,16) après avoir tordu ladite partie extérieure (53A) de ladite tige (24;124; 224; 324;424).

3. Rivet aveugle selon la revendication 1 ou 2, caractérisé par :
- un évidement annulaire agrandi (60;160;286A;286B) dans ladite tête de corps (54;254;454) ménagé autour d'une ouverture extérieure dudit alésage s'étendant à travers ledit corps de rivet (26;176;276;376);
- ledit écrou d'entraînement (28) recouvrant ledit évidement annulaire agrandi (60;160;286A;286B);
- une position intermédiaire de ladite tige (24;124;224;424) écartée radialement à partir de l' intérieur dudit alésage ménagé à travers ledit corps de rivet (26;176;276;376) pour fournir un canal annulaire entre eux, lequel canal s'étend axialement entre des plans terminaux constitués par un épaulement radial de ladite tige (24;124;224;424) et dudit écrou (28) respectivement;
- ledit anneau de serrage annulaire (30;130;230;430) s'étendant à l'intérieur dudit canal annulaire, la longueur axiale dudit canal annulaire étant supérieure à celle dudit anneau de serrage annulaire, afin, lorsqu'un couple est appliqué à ladite tige (24;124;224;424), de faire ainsi avancer une extrémité extérieure dudit anneau de serrage annulaire (30;130;230;430) et de le faire venir en contact contre un desdits plans terminaux, la rotation supplémentaire de ladite tige (24;124;224;424) déformant ledit anneau de serrage (30;130;230;430) pour remplir ledit évidement annulaire (60;160;286A;286B).

4. Rivet aveugle selon la revendication 3, caractérisé en ce que ledit anneau de serrage annulaire (30;130) est claveté axialement à ladite tige (24;124) sur ledit épaulement radial.

5. Rivet aveugle selon la revendication 4, caractérisé en ce que l'anneau de serrage (30;130) est pourvu d'un segment d'épaulement annulaire épais (68) sur sa circonférence intérieure, ledit segment (68) se logeant dans un évidement d'anneau de serrage annulaire (50;150) à l'intérieur de ladite tige (24;124).

6. Rivet aveugle selon la revendication 3, caractérisé en ce que ledit anneau de serrage annulaire (230;430) est monté sur ladite tige (224;424) et en contact avec ledit écrou (28) et avec ledit évidement annulaire agrandi (286A,286B).

7. Rivet aveugle selon la revendication 6, caractérisé en ce que ledit évidement annulaire agrandi a la forme d'un chanfrein annulaire (286A) adapté audit anneau de serrage annulaire (230), ledit chanfrein (286A) présentant une entaille annulaire (286B) à son extrémité supérieure.

8. Rivet aveugle selon la revendication 6 ou 7, caractérisé en ce que ledit anneau de serrage annulaire (230;430) est monté par vissage sur ladite tige (224;424).

9. Rivet aveugle selon l'une des revendications 1 à 8, caractérisé en ce que :
- ledit corps de rivet (26) porte une zone formant queue déformable (58;70C;426) s'étendant au-delà de la surface intérieure (18) de ladite pièce mécaniques intérieure (16);
- et en ce que ladite tige (24;424) porte une tête de tige agrandie (36) à l'extrémité intérieure de ladite tige (24;424) en contact avec l'extrémité intérieure de ladite zone formant queue déformable (58, 70C; 426).

10. Rivet aveugle selon l'une des revendications 1 à 8, caractérisé en ce que :
- ledit corps de rivet (176;276;376) présente une queue rigide (180;280;380) s'avançant vers l'intérieur au-delà de ladite pièce mécanique intérieure (16);
- et en ce qu'il comporte un manchon déformable (178; 278;378) séparé dudit corps de rivet (176;276;376) autour de ladite tige (124;224;324) en contact avec ladite tête de tige (36).

11. Rivet aveugle selon l'une des revendications 1 à 10, caractérisé en ce qu'il comporte :
- un premier moyen sur ledit corps de rivet (26) et un deuxième moyen sur ladite tige (24) prévus pour coopérer afin d'éviter tout mouvement axial supplémentaire l'un par rapport à l'autre de ladite tige (24) à l'extérieur dudit corps de rivet (26) lorsque ladite rainure de rupture (52) a atteint la surface extérieure (62) de ladite tête de corps (54), assurant ainsi qu'une application supplémentaire d'un couple à ladite tige (24) tord ladite tige (24) de manière sensiblement à niveau avec la surface extérieure (62) de ladite tête de corps (54).

12. Rivet aveugle selon la revendication 11, caractérisé en ce que ledit premier moyen comporte un épaulement s'étendant radialement vers l'intérieur (59) sur ledit corps de rivet (26), et en ce que ledit deuxième moyen comporte un épaulement s'étendant radialement vers l'extérieur (45) sur ladite tige (24), lesdits épaulements (45,59) venant se placer en contact étroit pour arrêter tout mouvement relatif supplémentaire de ladite tige (24) vers l'extérieur à travers ledit corps de rivet (26) lorsque ladite rainure de rupture (52) se déplace sensiblement à niveau avec la surface extérieure (62) de ladite tête de corps (54).

13. Rivet aveugle selon l'une des revendications 1 à 12, caractérisé en ce que ledit écrou d'entraînement (28) est fait d'un matériau magnétique et en ce que ledit corps de rivet (26;176;276;376) est fait d'un matériau non magnétique.

14. Rivet aveugle selon l'une des revendications 1 à 13, caractérisé en ce qu'au moins un desdits écrous d'entraînement (28) et une desdites têtes de corps (54;254;354;454) sont moletés pour accroître la friction entre ledit écrou d'entraînement (28) et ladite tête de corps (54;254;354;454).

15. Rivet aveugle selon l'une des revendications 1 à 13, caractérisé en ce qu'au moins un desdits écrous d'entraînement (28) et une desdites têtes de corps (54;254;354;454) sont abrasés pour accroître la friction entre ledit écrou d'entraînement (28) et ladite tête de corps (54;254;354;454).

16. Procédé pour riveter des pièces mécaniques extérieure et intérieure se chevauchant (12,16) utilisant un rivet (10;110;210;310;410) du type présentant un corps de rivet de forme globalement tubulaire (26;176;276;376) avec une tête de corps agrandie (54;254;354;454), un manchon déformable (58; 178;278;378;426) à une extrémité dudit corps de rivet (26;176;276;376) à l'opposé de ladite tête de corps (54;254;354;454), et une tige filetée extérieurement (24;124; 224;324;424) s'étendant à travers des alésages alignés dans ledit manchon (58;178;278;378;426) et ledit corps de rivet (26;176;276;376), ladite tige (24;124;224;324;424) étant munie d'une rainure de rupture (52) entre des zones intérieure et extérieure de ladite tige (24;124;224;324;424), les étapes du procédé consistant à :
- insérer ledit rivet aveugle (10;110;210;310;410) à travers des ouvertures alignées (20,22) ménagées dans lesdites pièces mécaniques (12,16) pour les riveter ensemble jusqu'à ce que ladite tête de corps (54;254;354;454) s'engage sur une surface extérieure (14) de ladite pièce mécanique extérieure (12), ledit manchon (58;178; 278;378;426) étant placé au-delà d'une surface intérieure (18) de ladite pièce mécanique intérieure (16);
- appliquer un couple à une partie extérieure (53A) de ladite tige (24;124;224;324;424) pour tourner ladite tige (24;124;224;324;424) dans ladite direction jusqu'à ce que ledit manchon (58;178;278; 378;426) ait été déformé latéralement jusqu'à atteindre une condition de mise en place complète lorsqu'il recouvre ladite surface intérieure (18) de ladite pièce mécanique intérieure (16) et que ladite rainure de rupture (52) a été déplacée vers l'extérieur jusqu'à atteindre une position essentiellement à niveau avec une surface extérieure (62) de ladite tête de corps (54;254;354;454) pendant que ledit manchon (58;178;278;378;426) a été mis totalement en place;
- continuer à appliquer un couple à ladite tige (24;124;224;324;424) pour détacher ladite partie extérieure (53A) de ladite tige (24;124; 224;324;424) à l'endroit de ladite rainure de rupture, caractérisé par les étapes supplémentaires consistant à :
- visser un écrou d'entraînement (28) sur ladite partie extérieure (53A) de ladite tige (24;124;224;324;424) avant d'insérer ledit rivet (10;110;210;310;410) à travers lesdites ouvertures alignées (20,22);
- engager ledit écrou d'entraînement (28) pour le bloquer et l'empêcher de tourner, tout en appliquant un couple à ladite partie extérieure (53A) pour détacher ladite partie extérieure (53A), ledit écrou d'entraînement (28) étant encore fixé à ladite partie extérieure (53A) de ladite tige (24;124;224;324;424).

17. Procédé selon la revendication 16, caractérisé en ce que ledit écrou d'entraînement (28) est fait d'un matériau magnétique, ladite tige (24;124;224;324;424) étant faite d'un matériau non magnétique et ladite partie extérieure détachée (53A) de ladite tige (24;124;224;324;424) et ledit écrou d'entraînement y fixé (28) étant recouverts d'un balai magnétique.
